# EUROPÄISCHE PATENTSCHRIFT

(11) **EP 2 177 296 B1**
(45) Veröffentlichungstag und Bekanntmachung des Hinweises auf die Patenterteilung: **05.10.2011**
(21) Anmeldenummer: 08018230.6
(22) Anmeldetag: 17.10.2008
(51) Int. Cl.: B23B 31/30

(54) **Dehnspanneinrichtung**
Expansion chucking device
Dispositif de serrage extensible

(43) Veröffentlichungstag der Anmeldung: 21.04.2010
(73) Patentinhaber: Schunk GmbH & Co. KG Spann- und Greiftechnik, 74348 Lauffen am Neckar (DE)
(72) Erfinder: Gross, Johann, 74081 Heilbronn (DE); Peter, Ralph, 74348 Lauffen/Neckar (DE)
(74) Vertreter: Paul, Dieter-Alfred

(56) Entgegenhaltungen:
- DE-A1- 2 365 756
- DE-U1- 29 603 751
- FR-A- 2 495 520
- US-A- 3 507 507
- US-A- 4 366 735

## Beschreibung

Die vorliegende Erfindung betrifft eine Dehnspanneinrichtung gemäβ dem Oberbegriff des Anspruchs 1, mit einem Grundkörper und einer Dehnbüchse, die unter Bildung einer geschlossenen Druckkammer in den Grundkörper eingesetzt ist und zumindest an einem axialen Endbereich mit dem Grundkörper fest verbunden, insbesondere verlötet ist, wobei die Druckkammer unter elastischer verformung der Dehnbüchse mit einem Hydraulikmittel beaufschlagbar ist, um eine Spannwirkung zu erzielen. Eine solche Dehnspanneinrichtung ist aus DE 2365756 A1 bekannt.

Dehnspanneinrichtungen dieser Art sind in unterschiedlichen Ausführungsformen bekannt und werden in erster Linie eingesetzt, um einen Werkzeugschaft wie beispielsweise einen Bohrer- oder Fräserschaft in der Arbeitsspindel einer entsprechenden Werkzeugmaschine zu fixieren. Man unterscheidet zwei Arten von Dehnspänneinrichtungen, nämlich zum einen sogenannte Spanndorne, bei denen die Dehnbüchse den Grundkörper umgibt und sich bei Druckbeaufschlagung der Druckkammer radial nach außen aufweitet, und zum anderen Spannfutter, bei denen die Dehnbüchse in den Grundkörper eingesetzt ist und zum Spannen einer Welle oder eines Schaftes radial nach innen verformt wird.

Bei den bekannten Dehnspannwerkzeugen ist die Dehnbüchse an ihren axialen Endbereichen mit dem Grundkörper in der Regel verlötet, um eine feste Verbindung unter Bildung der geschlossenen Druckkammer herzustellen. Problematisch an dieser Lösung ist, daß die verbindungsbereiche durch die Wechselbelastungen im Betrieb starken Beanspruchungen unterworfen sind, die zum Bruch der Lötstellen führen können.

Zur Behebung dieser Problematik wird in der WO 01/60556 A1 vorgeschlagen, die Dehnbüchse und den Grundkörper in den verlöteten Verbindungsbereichen zusätzlich formschlüssig miteinander zu verbinden. Durch diese Ausgestaltung können zwar Radialkräfte, die zwischen dem Grundkörper und der Dehnbüchse auftreten, aufgefangen werden. Für die Bildung der formschlüssigen Verbindungen ist jedoch ein erhöhter Bearbeitungsaufwand erforderlich. Des weiteren gehen die Bestrebungen dahin, Beschädigungen der Lötverbindungen noch zuverlässiger zu vermeiden.

Eine Dehnspanneinrichtung der eingangs genannten Art ist ferner aus der DE 2365756 A1 bekannt. Bei dieser Dehnspanneinrichtung sind in der Außenmantelfläche der Dehnbüchse Druckkammern vorgesehen, deren axiale Randbereiche so ausgebildet sind, dass zwischen den Randbereichen der Druckkammern und dem Grundkörper dünne Wandungsbereiche gebildet werden, die durch den in der Druckkammer herrschenden Druck elastisch gegen den Grundkörper gedrückt werden.

Aufgabe der Erfindung ist es, eine Dehnspanneinrichtung der eingangs genannten Art so auszugestalten, dass insbesondere auch ohne einen formschlüssigen Eingriff zwischen Grundkörper und Dehnbüchse eine sichere Verbindung zwischen diesen Bauteilen gewährleistet ist.

Diese Aufgabe ist erfindungsgemäß bei der Dehnspanneinrichtung der eingangs genannten Art dadurch gelöst, dass die Dehnbüchse insbesondere an ihrem arbeitsspindelfernen Endbereich einen radial nach außen vorstehenden Kragen aufweist, der an seiner zum Grundkörper weisenden Stirnseite flächig an einem Absatz des Grundkörpers anliegt und fixiert, insbesondere festgelötet ist, und dass benachbart zu diesem Verbindungsbereich in dem Grundkörper eine zu der Druckkammer hin offene radiale Vertiefung ausgebildet ist, die derart ausgebildet und/oder positioniert ist, dass zwischen der Vertiefung und dem Verbindungsbereich eine dünne Wandung gebildet wird, die zumindest an ihrem druckraumseitigen Ende durch einen in der Vertiefung herrschenden Druck elastisch gegen den verlöteten verbindungsbereich gedrückt wird. In diesem Fall kann benachbart zu dem Verbindungsbereich in dem Grundkörper eine radiale Vertiefung beispielsweise in der Form einer radialen Nut ausgebildet sein.

Gemäß einer Ausführungsform der Erfindung ist vorgesehen, dass die Vertiefung eine zu der Erstreckungsrichtung des Verbindungsbereichs korrespondierende Erstreckung besitzt und insbesondere parallel zu der Erstreckungsrichtung verläuft. Wenn beispielsweise der Verbindungsbereich etwa in Futterachsrichtung verläuft, sollte sich die Vertiefung ebenfalls axial erstrecken. Im Falle einer radialen Lötverbindung hingegen besitzt dann die Vertiefung ebenfalls eine radiale Ausrichtung.

In Weiterbildung der Erfindung ist vorgesehen, dass die Dehnbüchse an ihrer Mantelfäche wenigstens eine die Druckkammer definierende Ausnehmung aufweist und die Verbindungsflächen, welche den Verbindungsbereich definieren, benachbart zu der Vertiefung vorgesehen ist.

Wenn in diesem Fall die Verbindungsflächen etwa in Futterachsrichtung verlaufen, ist zweckmäßigerweise in einer die Ausnehmung axial begrenzenden Stirnwand der Dehnbüchse eine sich in den axialen Bereich der Verbindungsflächen erstreckende Vertiefung beispielsweise in Form einer Ringnut ausgebildet.

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Ausführungsform eines als Dehnspann- futter ausgebildeten Dehnspannwerkzeugs gemäß der vorliegenden Erfindung im Längsschnitt.
- Figur 2: den Ausschnitt Z aus Figur 1 in einer vergrö- ßerten Darstellung,
- Figur 3: den Ausschnitt Z1 aus Figur 2 in einer weiter vergrößerten Darstellung,
- Figur 4: den Ausschnitt Y aus Figur 1 in einer vergrö- ßerten Darstellung,
- Figur 5: den Ausschnitt Y1 aus Figur 4 in einer noch weiter vergrößerten Darstellung,
- Figur 6: ein nicht erfindungsgemäßes als Dehnspanndorn ausgebildete Dehnspannwerkzeug ,
- Figur 7: den Ausschnitt Z aus Figur 6 in einer vergrö- ßerten Darstellung,
- Figur 8: den Ausschnitt Z1 aus Figur 7 in einer weiter vergrößerten Darstellung,
- Figur 9: den Aussschnitt Y1 aus Figur 6 in einer vergrö- ßerten Darstellung, und
- Figur 10: den Ausschnitt Y1 aus Figur 9 in einer weiter vergrößerten Darstellung.

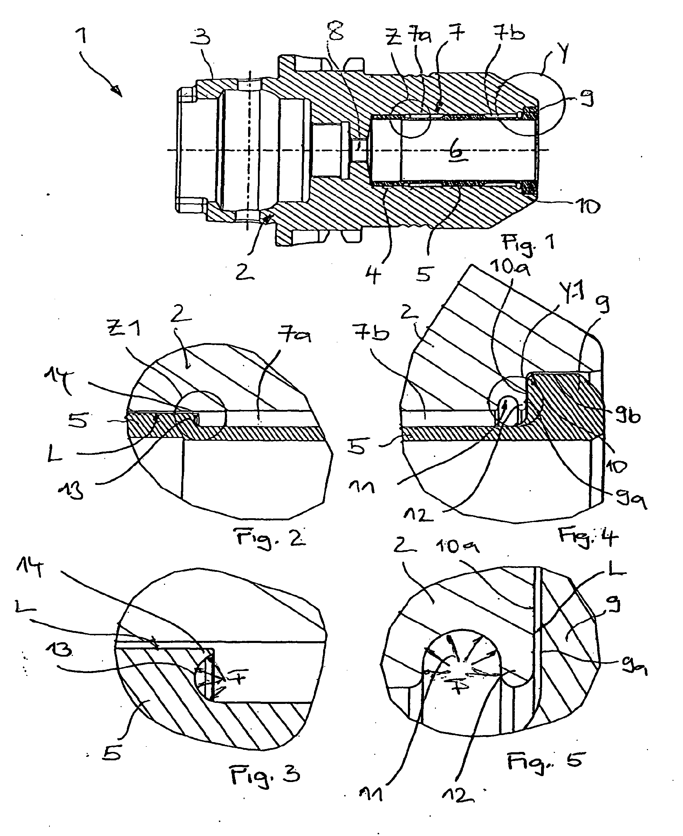

In den Figuren 1 bis 5 ist eine Ausführungsform eines als Steilkegelwerkzeughalter ausgebildeten Dehnspannfutters 1 gemäß der vorliegenden Erfindung im Längsschnitt dargestellt. Das Dehnspannfutter 1 umfasst einen Grundkörper 2 aus einem formsteifen Material, der an seinem nicht dargestellten, linksseitigen Endbereich in an sich bekannter Weise einen Befestigungskonus 3 zur Einspannung an einer drehangetriebenen Arbeitsspindel einer Werkzeugmaschine aufweist. An dem anderen Ende des Grundkörpers 2 ist ein Anschlußschaft mit einer zentralen Axialbohrung 4 vorgesehen, in die eine Dehnbüchse 5 eingesetzt ist. Die Dehnbüchse 5 bildet dabei eine Aufnahme 6, in die ein zylindrischer Schaft eines Werkzeugs wie beispielsweise eines Bohrers oder Fräsers eingeschoben werden kann.

Zwischen der Dehnbüchse 5 und dem Grundkörper 2 ist eine Druckkammer 7 ausgebildet, welche die Aufnahme 6 umgibt und koaxial zu dieser ausgerichtet ist. Die Druckkammer 7, deren axiale Länge etwa dem erforderlichen Spannbereich entspricht, wird durch zwei ringartige Ausnehmungen 7a, 7b in der Mantelfläche der Dehnbüchse 5, die untereinander verbunden sind, gebildet.

Zur Aufnahme 6 hin wird die Druckkammer 7 von einer relativ schmalen Innenwand der Dehnbüchse 5 und radial nach außen von der Wandung des Grundkörpers 2, deren Wandstärke um ein mehrfaches größer als die Wandstärke der Innenwand ist, begrenzt. Die Druckkammer 7 ist mit einem Hydraulikmittel wie beispielsweise Öl gefüllt und steht in nicht dargestellter Weise über einen im Grundkörper 2 ausgebildeten Kanal mit einer Hydraulikmittelquelle in Verbindung, durch die sie zum Spannen eines Werkzeugs mit Druck beaufschlagt werden kann. Die Druckmittelquelle kann in an sich bekannter Weise von einem im Grundkörper 2 ausgebildeten Zylinderraum gebildet sein, der endseitig durch ein kolbenartiges Stellorgan verschlossen ist, das zur Erhöhung des Drucks in den Zylinderraum eingeschraubt bzw. zur Verringerung des Drucks aus dieser heraus geschraubt werden kann. Dieser hydraulische Druck wird über den Kanal zur Druckkammer 7 übertragen und bewirkt eine elastische Auswölbung der Innenwand 8 nach innen, bis diese den in die Aufnahme 6 eingesetzten Werkzeugschaft fest umschließt.

Die Dehnbüchse 5 ist mit dem Grundkörper 2 fest verbunden, indem sie an ihren axialen Endbereichen mit dem Grundkörper 2 in an sich bekannter Weise verlötet ist.

Bei der in den Figuren 1 bis 5 dargestellten Ausführungsform ist die Dehnbüchse 5 als eine zylindrische Hülse ausgebildet, die im wesentlichen einen zum Durchmesser der zentralen Axialbohrung 4 korrespondierenden Außendurchmesser besitzt. An ihrem werkzeugseitigen Endbereich weist die Dehnbüchse 5 einen radial nach außen vorstehenden Kragen 9 auf, der in eine entsprechende stirnseitige Ausnehmung 10 des Grundkörpers 2 eingreift.

Dabei kommt eine zum Grundkörperinneren hin weisende Stirnfläche 9a des Kragens 9 an einer korrespondierenden Stirnfläche 10a der Ausnehmung 10 in Anlage. In diesem Anlagebereich sowie im Bereich der äußeren Mantelfläche 9b des Kragens 9 sind die Dehnbüchse 5 und der Grundkörper 2 miteinander fest verbunden, insbesondere verlötet. Benachbart zu diesem Verbindungsbereich L ist in der die Druckkammer 7 außenseitig begrenzenden Wandung des Grundkörpers 2 eine radiale Ringnut 11 bzw. ein Freistich vorgesehen, die sich ringförmig um die Druckkammer 7 erstreckt. Die Ringnut 11 ist dabei derart nahe zu dem radialen Abschnitt des verbindungsbereiches L zwischen dem Kragen 9 und dem Grundkörper 2 positioniert, dass dazwischen nur eine dünne Wandung 12 verbleibt. Diese wird elastisch in Richtung des Kragens 9 gegen den Verbindungsbereich L gedrückt, wenn in der Druckkammer 7 und damit auch in der Ringnut 11 ein Druck aufgebaut wird. Mit anderen Worten wird die dünne Wandung 12 durch die in der Ringnut 11 wirkenden Druckkräfte F gegen den Verbindungsbereich L gedrückt, welcher auf diese Weise vor Beschädigungen geschützt wird.

An ihrem inneren Endbereich ist die Dehnbüchse 5 ebenfalls mit dem Grundkörper 2 unter Bildung eines Verbindungsbereiches L fest verbunden, insbesondere verlötet. Konkret erstreckt sich der Verbindungsbereich L von dem linkseitigen Ende der Druckkammer 7 bis zu dem arbeitsspindelseitigen Ende der Dehnbüchse 5. In diesem Verbindungsbereich L sind die Außenfläche der Dehnbüchse 5 und die zentrale Bohrung 4 zylindrisch ausgebildet, so dass sich der Verbindungsbereich L ringförmig um die Futterachse X erstreckt.

Wie insbesondere in den Figuren 1 und 2 gut erkennbar ist, ist benachbart zu dem Verbindungsbereich L in der die Druckkammer 7 arbeitsspindelseitig begrenzenden Stirnfläche der linken Ausnehmung 7a der Dehnbüchse 5 eine Ringnut 13 ausgebildet, die sich axial den verbindungsbereich erstreckt und derart nah zu diesem positioniert ist, dass zwischen dem Verbindungsbereich L und der Ringnut 13 eine dünne Wandung 14 der Dehnbüchse 5 stehen bleibt, die elastisch gegen den Verbindungsbereich L gedrückt wird, wenn in der Druckkammer 7 und damit auch in der Ringnut 13 ein Druck aufgebaut wird. Diese in der Ringnut 13 auf die Wandung 14 wirkenden Druckkräfte F schützen die Lötstelle L vor Beschädigungen, die insbesondere aufgrund von auftretenden Scherkräften entstehen könnten.

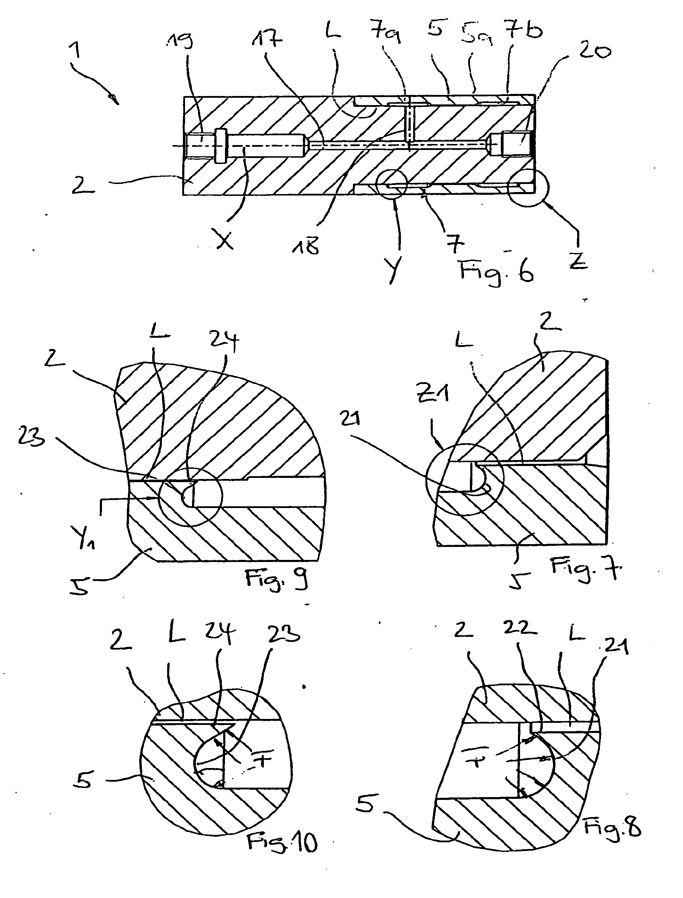

In den Figuren 6 bis 10 ist eine nitch erfindungsgemäße Dehspanneinrichtung dargestellt, die hier als ein Dehnspanndorn 1 ausgebildet ist, der dazu dient, auβenseitig ein Bauteil zu spannen. Der Dehnspanndorn 1 besitzt einen Grundkörper 2, der an seinem linken Endbereich beispielsweise in der Arbeitsspindel einer Arbeitsmaschine, einspannbar ist und an seinem rechten Endbereich außenseitig eine Dehnbüchse 5 trägt. Die Dehnbüchse 5 bildet außenseitig eine Spannfläche 5a, auf die ein zu spannendes Bauteil aufgeschoben werden kann. Zwischen der Dehnspannbüchse 5 und dem Grundkörper 2 ist eine Druckkammer 7 ausgebildet, welche koaxial zu der Spanndornachse X ausgerichtet ist. Die Druckkammer 7 wird durch zwei ringartige Ausnehmungen 7a, 7b in der inneren Mantelfläche der Dehnbüchse 5, die untereinander verbunden sind, gebildet.

Außenseitig wird die Druckkammer 7 von der relativ schmalen Außenwand der Dehnbüchse 5, und innenseitig von dem Material des Grundkörpers 2 begrenzt. Die Druckkammer 7 steht mit einem im Grundkörper 2 ausgebildeten Hydraulikmittelkanal 17, welcher den Grundkörper 2 axial durchsetzt und zentral in dem Grundkörper 2 angeordnet ist, über einen Anschlusskanal 18 in Verbindung. Der Hydraulikmittelkanal 17 ist an seinen Endbereichen mit Gewindebohrungen 19, 20 versehen, die durch nicht dargestellte Spannschrauben 19, 20 verschlossen sind. Um ein Bauteil zu spannen, wird eine dieser Spannschrauben in das Grundkörperinnere geschraubt, wodurch sich der Hydraulikdruck innerhalb der Hydraulikmittelleitung 17, des Anschlusskanals 18 sowie der Druckkammer 7 erhöht und auf diese Weise die Dehnbüchse 5 elastisch nach außen verformt wird.

Die - hier außenliegende - Verbindungsfläche des Grundkörpers 2 ist zylindrisch ausgebildet, genauso wie die - hier innenliegende - korrespondierende Verbindungsfläche der Dehnbüchse 5, so dass an den beiden axialen Endbereichen der Dehnbüchse 5 verbindungsbereiche L gebildet werden, die sich ringförmig um die Futterachse X erstrecken und parallel zu dieser ausgerichtet sind.

In den beiden Stirnwänden, welche die Druckkammer 7 an ihren beiden axialen Enden begrenzen, sind Vertiefungen 21, 23 in Form von axialen Ringnuten ausgebildet. Diese sind so positioniert, dass zwischen den Ringnuten 21, 23 und den zugehörigen Verbindungsbereichen L lediglich ein dünne Wandung 22, 24 verbleibt, die beim Druckaufbau innerhalb der Druckkammer 7 und damit auch innerhalb der Ringnuten 21, 23 elastisch gegen den Verbindungsbereich L gedrückt wird.

Bei allen vorbeschriebenen Dehnspanneinrichtungen bilden die Ringnuten 11, 13, 15, 21 und 23 Erweiterungen der Druckkammer 7, welche sich etwa parallel zu dem jeweiligen Verbindungsbereich L zwischen der Dehnbüchse 5 und dem Grundkörper 2 erstrecken, um insbesondere in dem druckkammerseitigen Anfangsabschnitt des Verbindungsbereiches L Druckkräfte F zu erzeugen, welche auf die Lötstelle einwirken und diese damit vor Beschädigungen schützen.

## Patentansprüche

1. Dehnspanneinrichtung mit einem Grundkörper (2) und einer Dehnbüchse (5), die unter Bildung einer geschlossenen Druckkammer (7) in den Grundkörper (2) eingesetzt ist und zumindest an einem axialen Endbereich mit dem Grundkörper (2) fest verbunden, insbesondere verlötet ist, wobei die Druckkammer (7) unter elastischer Verformung der Dehnbüchse (5) mit einem Hydraulikmittel beaufschlagbar ist, um eine Spannwirkung zu erzielen, wobei die Dehnbüchse (5) insbesondere an ihrem arbeitsspindelfernen Endbereich einen radial nach außen vorstehenden Kragen (9) aufweist, der an seiner zum Grundkörper (2) weisenden Stirnseite (9a) flächig an einem Absatz (10) des Grundkörpers (2) anliegt und fixiert, insbesondere festgelötet ist, **dadurch gekennzeichnet, dass** benachbart zu diesem Verbindungsbereich (L) in dem Grundkörper (2) eine zu der Druckkammer (7) hin offene radiale Vertiefung (11) ausgebildet ist, die derart ausgebildet und/oder positioniert ist, dass zwischen der Vertiefung (11) und dem Verbindungsbereich (L) eine dünne Wandung (12) gebildet wird, die zumindest an ihrem druckraumseitigen Ende durch einen in der Vertiefung (11) herrschenden Druck elastisch gegen den verlöteten Verbindungsbereich (L) gedrückt wird.

2. Dehnspanneinrichtung nach Anspruch 1, **dadurch gekennzeichnet, dass** die Vertiefung als eine radiale Ringnut (11) in dem Grundkörper (2) ausgebildet ist.

3. Dehnspanneinrichtung nach Anspruch 1 oder 2, **dadurch gekennzeichnet, dass** die Dehnbüchse (5) mit dem Grundkörper (2) an ihren beiden Endbereichen fest verbunden, insbesondere verlötet ist und an ihrem dem Kragen (9) gegenüberliegenden Endbereich benachbart zu dem Verbindungsbereich eine zu der Druckkammer (7) hin offene Vertiefung (13) aufweist, die derart ausgebildet und/oder positioniert ist, dass zwischen der Vertiefung (13) und dem Verbindungsbereich (L) eine dünne Wandung (14) gebildet wird, die zumindest an ihrem druckraumseitigen Ende durch einen in der Vertiefung (13) herrschenden Druck elastisch gegen den verlöteten Verbindungsbereich (L) gedrückt wird.

4. Dehnspanneinrichtung nach Anspruch 3, **dadurch gekennzeichnet, dass** die Dehnbüchse (5) in ihrer Mantelfäche wenigstens eine die Druckkammer (7) definierende Ausnehmung (7a, 7b) aufweist und der Verbindungsbereich (L) benachbart zu der Ausnehmung (7a, 7b) vorgesehen ist.

5. Dehnspanneinrichtung nach Anspruch 4, **dadurch gekennzeichnet, dass** der Verbindungsbereich (L) an dem dem Kragen (9) gegenüberliegenden Endbereich etwa in der Futterachsrichtung (X) verläuft, und in einer die Ausnehmung axial begrenzenden Stirnwand der Dehnbüchse (5) die Vertiefung (13) ausgebildet ist, welche sich in den axialen Bereich des verbindungsbereichs (L) erstreckt.

6. Dehnspanneinrichtung nach Anspruch 5, **dadurch gekennzeichnet, dass** die Vertiefung als Ringnut (13) in der Stirnfläche ausgebildet ist.

7. Dehnspanneinrichtung nach einem der vorhergehenden Ansprüche, **dadurch gekennzeichnet, dass** die Vertiefung (11, 13) eine zu der Erstreckungsrichtung des Verbindungsbereichs (L) korrespondierende Erstreckung besitzt.

8. Dehnspanneinrichtung nach Anspruch 7, **dadurch gekennzeichnet, dass** die Erstreckungsrichtung der Vertiefung (11, 13) etwa parallel zu der Erstreckungsrichtung des Verbindungsbereiches (L) verläuft.

9. Dehnspanneinrichtung nach einem der vorherigen Ansprüche, **dadurch gekennzeichnet, dass** der Grundkörper (2) und die Dehnbüchse (5) im Verbindungsbereich (L) zueinander korrespondierende, im wesentlichen geradlinig und parallel zueinander verlaufende Verbindungsflächen aufweisen.

## Claims

1. An expansion chucking device comprising a base body (2) and an expanding bushing (5) which is inserted into the base body (2) such as to form a closed pressure chamber (7) and which is connected, particularly soldered, at least at one axial end region securely to the base body (2), it being possible to charge the pressure chamber (7) with a hydraulic medium, thus elastically deforming the expanding bushing (5) in order to achieve a chucking effect, the expanding bushing (5) having, in particular on its end region away from the work spindle, a radially outwardly projecting flange (9) which on its face side (9a) facing towards the base body (2) rests flat against a ledge (10) of the base body (2) and is fixed, in particularly securely soldered, thereto, **characterised in that** there is formed adjacent to this connection region (L) in the base body (2) a radial indentation (11) open towards the pressure chamber (7) which is formed and/or positioned such that there is formed between the indentation (11) and the connection region (L) a thin wall (12) which is pressed elastically, at least on its end on the pressure chamber side by a pressure prevailing in the indentation (11) against the soldered connection region (L).

2. The expansion chucking device according to Claim 1, **characterised in that** the indentation is in the form of a radial annular groove (11) in the base body (2).

3. The expansion chucking device according to Claim 1 or 2, **characterised in that** the expanding bushing (5) is securely connected, in particular soldered, to the base body (2) at its two end regions, and on its end region lying opposite the flange (9) adjacent to the connection region has an indentation (13) open towards the pressure chamber (7) which is formed and/or positioned such that there is formed between the indentation (13) and the connection region (L) a thin wall (14) which at least on its end on the pressure chamber side is pressed elastically by a pressure prevailing in the indentation (13) against the soldered connection region (L).

4. The expansion chucking device according to Claim 3, **characterised in that** the expanding bushing (5) has in its lateral area at least one recess (7a, 7b) defining the pressure chamber (7), and the connection region (L) is provided adjacent to the recess (7a, 7b).

5. The expansion chucking device according to Claim 4, **characterised in that** on the end region lying opposite the flange (9) the connection region (L) extends approximately in the feed axis direction (X), and in a face wall of the expanding bushing (5) axially adjacent to the recess the indentation (13) is formed which extends into the axial region of the connection region (L).

6. The expansion chucking device according to Claim 5, **characterised in that** the indentation is in the form of an annular groove (13) in the face surface.

7. The expansion chucking device according to any of the preceding claims, **characterised in that** the indentation (11, 13) has an extension corresponding to the direction of extension of the connection region (L).

8. The expansion chucking device according to Claim 7, **characterised in that** the direction of extension of the indentation (11, 13) extends approximately parallel to the direction of extension of the connection region (L).

9. The expansion chucking device according to any of the preceding claims, **characterised in that** the base body (2) and the expanding bushing (5) have corresponding connection surfaces extending in a substantially straight line and parallel to one another in the connection region (L).

## Revendications

1. Dispositif de serrage extensible avec un corps de base (2) et une douille extensible (5) qui est montée dans le corps de base (2) en formant une chambre de compression (7) fermée et est fermement reliée, notamment brasée au corps de base (2), au moins sur une extrémité axiale, sachant que la chambre de compression (7) peut être alimentée avec un milieu hydraulique en déformant élastiquement la douille extensible (5), pour obtenir un effet tendeur, sachant que la douille extensible (5) présente notamment sur son extrémité éloignée de l'arbre moteur, un rebord (9) radialement en saillie vers l'extérieur, qui est posé et fixé, notamment brasé sur son côté frontal (9a) tourné vers le corps de base (2) à plat sur un élément en retrait (10) du corps de base (2), **caractérisé en ce que** de manière contiguë à cette zone de liaison (L) dans le corps de base (2), une cavité (11) ouverte radiale en direction de la chambre de compression (7) est formée, qui est formée et / ou positionnée de telle manière qu'entre la cavité (11) et la zone de liaison (L), une fine paroi est formée, qui au moins sur son extrémité côté chambre de compression est pressée par une pression dominante dans la cavité (11) de manière élastique contre la zone de liaison (L) brasée.

2. Dispositif de serrage extensible selon revendication 1, **caractérisé en ce que** la cavité est formée en tant que rainure annulaire (11) dans le corps de base (2).

3. Dispositif de serrage extensible selon revendication 1 ou 2, **caractérisé en ce que** la douille extensible (5) est fermement reliée, notamment brasée avec le corps de base (2) sur ses deux extrémités, et présente sur son extrémité opposée au rebord (9) de manière contiguë par rapport à la zone de liaison, une cavité (13) ouverte vers la chambre de compression (7), qui est formée et / ou positionnée de telle manière qu' entre la cavité (13) et la zone de liaison (L) une fine paroi est formée, qui au moins sur son extrémité côté chambre de compression est pressée par une pression dominante dans la cavité (11) de manière élastique contre la zone de liaison (L) brasée.

4. Dispositif de serrage extensible selon revendication 3, **caractérisé en ce que** la douille extensible (5) présente dans sa surface extérieure au moins un évidement (7a, 7b) définissant la chambre de compression (7) et la zone de liaison (L) contiguë à l'évidement est prévue.

5. Dispositif de serrage extensible selon revendication 4, **caractérisé en ce que** la zone de liaison (L) passe approximativement dans la direction de l'axe du mandrin (X) sur l'extrémité opposée au rebord (9) et la cavité (13) est formée dans une face avant de la douille extensible (5) limitant l'évidement de manière axiale, laquelle s'étend dans la zone axiale de la zone de liaison (L).

6. Dispositif de serrage extensible selon revendication 5, **caractérisé en ce que** la cavité est formée en tant que rainure annulaire (13) dans la surface avant.

7. Dispositif de serrage extensible selon l'une des revendications précédentes, **caractérisé en ce que** la cavité (11, 13) possède une extension correspondant au sens d'extension de la zone de liaison (L).

8. Dispositif de serrage extensible selon revendication 7, **caractérisé en ce que** le sens d'extension de la cavité (11, 13) passe approximativement parallèlement par rapport au sens d'extension de la zone de liaison (L).

9. Dispositif de serrage extensible selon l'une des revendications précédentes, **caractérisé en ce que** le corps de base (2) et la douille extensible (5) présentent dans la zone de liaison (L) des surfaces de liaison correspondant les unes avec les autres, essentiellement en ligne droite et s'étendant parallèlement les unes aux autres.
